# EUROPEAN PATENT SPECIFICATION

(11) **EP 2 148 001 B1**
(45) Date of publication and mention of the grant of the patent: **24.02.2016**
(21) Application number: 08013244.2
(22) Date of filing: 23.07.2008
(51) Int. Cl.: D21C 3/00

(54) **Pulping of cellulosic material in the presence of a cationic polymer**
Verfahren zum Aufschliessen von cellulosehaltigem Material im Gegenwart von einem kationischen Polymer
Procédé de réduction en pate de matière cellulosique en presénce d'un polymère cationique

(43) Date of publication of application: 27.01.2010
(73) Proprietor: Solenis Technologies Cayman, L.P., 8200 Schaffhausen (CH)
(72) Inventor: Schulte, Johann, 47803 Krefeld (DE)
(74) Representative: Bülle, Jan

(56) References cited:
- EP-A- 0 723 047
- WO-A-01/71092
- WO-A-01/98579
- WO-A-96/16224
- WO-A-2005/056916
- US-A- 3 658 640
- US-A- 4 964 955
- US-A- 5 256 252
- US-A1- 2002 096 293

## Description

### FIELD OF THE INVENTION

The invention relates to a method for manufacturing paper, paperboard or cardboard by pulping a cellulosic material in the presence of a cationic polymer. Further, the invention relates to the use of said cationic polymer in paper manufacturing.

### BACKGROUND PRIOR ART

Paper manufacture is among the most water intensive industries. In the course of the paper making process, at various stages substantial amounts of water and aqueous solutions are added to the cellulosic fibers (inflow stream) and separated therefrom, respectively (effluent stream).

US 4.964.555 discloses a method of and substances for reducing pitch in pulping and papermaking operations, particularly in furnishes made by mechanical pulping processes containing wood pulp in amounts greater than about 10% by weight.

WO 01/71092 A2 relates to methods for inhibiting the depositions of organic contaminants from pulp in pulp and papermaking systems. Whey proteins or a combination of a protein and a cationic polymer are added to the pulp or applied to deposition prone surfaces of a papermaking system.

US 5,256,252 relates to the controlling of pitch deposits for the pulp and papermaking field.

As a result of growing concern for the purity of water resources and in response to growing governmental pressures to maintain the quality of these water resources, paper industry has been required to investigate and implement methods for reducing chemical pollutants contained in their effluent water streams. The danger of chemical pollution in water is due to the ability of organic constituents of the effluent streams of paper mills to bind dissolved oxygen contained in the water. This binding, whether by chemical reaction or simple chemical interaction, prevents the utilization of dissolved oxygen by aquatic life. The effect of this binding is commonly referred to as chemical oxygen demand (COD).

Because of the importance of maintaining adequate levels of dissolved oxygen in water streams, various governmental agencies have set forth guidelines and test procedures for measuring the COD of effluent streams of paper mills entering rivers and lakes. Various processes have been implemented to improve the quality of the water discharged. Among the methods proposed are (1) evaporation followed by incineration, (2) chemical treatment to render the organic constituents in the effluent harmless, (3) biological treatment and aeration of effluent collected in holding tanks, and (4) oxidation of the chemical constituents under restrictive conditions.

Evaporation followed by incineration is impractical where large volumes of water are involved. The procedure is extremely slow, expensive and imposes significant expenditures in manpower time.

Chemical treatment, such as chlorination, ozonation, treatment with hydrogen peroxide, etc., can be dangerous and expensive and is effective only on specific chemical pollutants. As a practical matter, in order to be effective, any chemical treatment method employed requires testing by expensive processes to ascertain the precise nature of the contaminants.

The biological process uses microorganisms, such as bacteria, to decompose chemical pollutants. However, biological processes are limited by the nature of the microorganisms themselves. Great care must be exercised to maintain an environment in which the microorganisms will function. The temperature of the waste water must be carefully regulated to prevent adverse effects at the range where the microorganisms are active. The waste water must be supplemented with appropriate nutrients and other additives which allow the microorganisms to function at the desired level of efficiency. Likewise, care must be taken that the waste water contains no bacterocidal or bacterostatic compounds, which will cause bacterial activity to cease. Furthermore, specific strains of microorganisms are specifically suited only for the decomposition of specific chemicals. Thus, an industry employing a biological process must be able to provide a system which combines specific strains of microorganisms specifically developed to decompose the various organic pollutants present in that industry's effluent streams. This requirement renders biological systems impractical and exigent.

The process for oxidative treatment is the reduction of the total pollutant content of waste water by reacting the organic-containing water with oxygen at an elevated temperature, optionally at super-atmospheric pressure or in the presence of catalysts. Frequently, a reaction temperature of up to 537.8 °C (1000 °F) to assure decomposition of the organic constituents is required and the processes do not provide for variances in the levels of organic pollutants present in the water. Furthermore, contamination of the catalyst surface by organic contaminants can cause failure of the catalytic surface. This requires complex regeneration to restore the catalytic-adsorptive surface of the catalysts.

It is well known that the higher the COD of the waste water to be treated, the more ineffective, more unreliable and more expensive are these processes.

Therefore, there is a demand for a method for manufacturing paper or paperboard which reduces the COD of the waste water that is produced at the individual stages of the paper manufacturing process including the early stages, e.g. the pulping stage. It is also desirable that the reduction of the COD is achieved by avoiding the addition of further chemicals to the manufacturing process, which are typically not used during the production of paper. These "foreign" chemicals might influence the actual paper making process, for example, resulting in decreased paper quality.

### SUMMARY OF THE INVENTION

The invention relates to a method for manufacturing paper or paperboard comprising the steps of
(a) pulping a cellulosic material originating from recovered waste paper in the presence of a cationic polymer which is derived from monomers according to general formula (V), 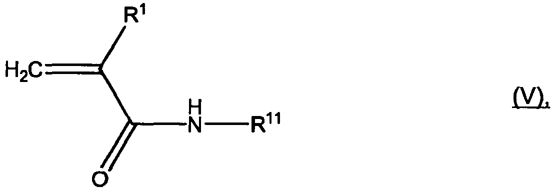 wherein
   R¹ stands for -H or -CH₃, and
   R¹¹ stands for -C₂-C₆-alkylene-N⁺(C₁-C₃-alkylh)₃X⁻, where X⁻ is Cl⁻, Br⁻ or SO₄²⁻; and
(g) supplying the cellulosic material to a paper machine.

It has been surprisingly found that the pulping of a cellulosic material in the presence of a cationic polymer reduces the COD of the pulp and the resulting effluents. Thus, by pulping the cellulosic material in the presence of a cationic polymer, the COD can be reduced and further chemicals, the addition of which would otherwise become necessary in order to reduce the COD ("foreign" chemicals), can be avoided. Thus, by pulping in the presence of a cationic polymer the water-treatment processes are rendered environmentally sound, more efficient, more reliable and less expensive.

Further, it has been surprisingly found that the addition of the cationic polymer during this early stage of the paper making process may also improve the properties of the produced paper, e.g. increase its strength. Surprisingly, cationic polymers, such as polyacrylic acid amides or polyacrylic acid esters, which are conventionally added at a far later, final stage of the paper-making process, for example to the wet end of the paper machine, are stable throughout the entire manufacturing process and still increase the strength properties of the final paper products.

### BRIEF DESCRIPTION OF THE DRAWINGS

Figure 1 displays the measured COD values after pulping the cellulosic material in the absence or presence of preferred cationic polymers.
Figure 2 displays the measured Scott Bond values after pulping the cellulosic material in the absence or presence of preferred cationic polymers.
Figure 3 displays the measured tension length values after pulping the cellulosic material in the absence or presence of preferred cationic polymers.
Figure 4 displays the measured burst pressure values after pulping the cellulosic material in the absence or presence of preferred cationic polymers.
Figure 5 displays the measured COD values after pulping the cellulosic material in the absence or presence of preferred cationic polymers.
Figure 6 displays the measured turbidity values after pulping the cellulosic material in the absence or presence of preferred cationic polymers.
Figure 7 displays the measured Scott Bond values after pulping the cellulosic material in the absence or presence of preferred cationic polymers.
Figure 8 displays the measured tension length values after pulping the cellulosic material in the absence or presence of preferred cationic polymers.
Figure 9 displays the measured burst pressure values after pulping the cellulosic material in the absence or presence of preferred cationic polymers.

### DETAILED DESCRIPTION OF THE INVENTION

A first aspect of the invention relates to a method for manufacturing paper, paperboard or cardboard comprising the steps of
(a) pulping a cellulosic material originating from recovered waste paper in the presence of a cationic polymer which is derived from monomers according to general formula (V), 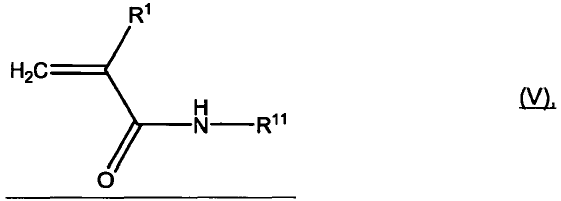 wherein
   R¹ stands for -H or -CH₃, and
   R¹¹ stands for -C₂-C₆-alkylene-N⁺(C₁-C₃-alkyl)₃ X⁻, where X⁻ is Cl⁻, Br⁻ or SO₄²⁻; and
(g) supplying the cellulosic material to a paper machine.

The conditioning of paper generally releases paper fibers and further polymeric constituents of the (waste) paper, such as chemical additives (e.g., starches, carboxymethyl celluloses [CMC], polyvinyl alcohol [PVal], and the like). Said polymeric constituents increase the chemical oxygen demand of the resultant effluents. It now has been surprisingly found that anionic polymeric constituents, such as anionic starches, may be bound to the cellulose fibers at a very early stage of paper manufacture, simply by the addition of suitable amounts of suitable cationic polymers, which in conventional processes are added at a far later stage, if any.

The basic steps of paper manufacture including the above steps (a) and (g) are known to the skilled artisan. In this regard it can be referred to, e.g., C.J. Biermann, Handbook of Pulping and Papermaking, Academic Press; 2 edition (1996); J.P. Casey, Pulp and Paper, Wiley-Interscience; 3 edition (1983); and E. Sjöström et al., Analytical Methods in Wood Chemistry, Pulping and Papermaking (Springer Series in Wood Science), Springer; 1 edition (1999).

The raw material for paper is fiber. For the purpose of the specification, "pulping" is to be regarded as the process of separating the fibers, suitable for papermaking, from the non-fibrous material of wood or other fibrous sources. For the purpose of the specification, the term "pulping" preferably refers to the chemical, mechanical or semi-chemical production of an aqueous dispersion or aqueous suspension of cellulosic material with comparatively low lignin content from wood or other cellulosic material such as recovered (waste) paper. Preferably, pulping is the first step in paper manufacturing where the cellulosic material is brought into contact with substantial amounts of water thereby generating aqueous slurry, i.e. an aqueous suspension of cellulosic fibers, also referred to as pulp. Said pulp forms an intermediate, fibrous material for the manufacture of paper, paperboard or cardboard.

The site of pulping is referred to as the pulper, i.e. a reaction vessel used for the manufacturing of an aqueous dispersion or suspension of the cellulosic material. Sometimes, a pulper is also referred to as a digester, hydrapulper or hydropulper.

In case that timber is used as the initial starting material for the paper making process, the timber is preferably de-barked by stripping bark from the logs by e.g. knife, abrasion, or hydraulic barker. Preferably, the stripped logs are subsequently chipped into smaller pieces and the resulting wood chips may be used as the actual starting material for the pulping step.

In case that recovered (waste) paper is used as the starting material for the paper manufacturing process, suitable recovered (waste) paper is typically directly introduced to the pulper. Waste paper may be also mixed with a quantity of virgin material such as wood chips to improve the quality of the cellulosic material, referred to as downcycling.

For the purpose of the specification, the term "cellulosic material" refers to any material comprising cellulose including timber and recovered (waste) paper. Further, the term "cellulosic material" refers to all intermediate and final products during the paper making process, which originate from timber and/or recovered (waste) paper, such as dispersions or suspensions of cellulosic material, pulped cellulosic material, de-inked cellulosic material, blended cellulosic material, bleached cellulosic material, refined cellulosic material, screened cellulosic material and the final paper, paperboard or cardboard. Therefore, the term "cellulosic material" encompasses pulp, slurry, sludge, stock, and the like. If not expressly states otherwise, percentages based on the cellulosic material are to be regarded as being based on the overall composition containing the cellulosic material.

A person skilled in the art knows that the cellulosic material may contain further components besides cellulose, such as chemicals used for the chemical and semi-chemical pulping step, dyes, bleaching agents, fillers, etc.

For the purpose of the specification, the term "paper-making process" refers to the manufacturing of paper as well as to the manufacturing of paperboard and cardboard.

For the purpose of the specification, the cellulosic starting material for the manufacturing of paper, paperboard and/or cardboard, which originates from timber, is referred to as "virgin material", whereas the starting material, which originates from recovered (waste) paper, is referred to as "recycle material". It is also possible that a blend of virgin material and recycle material is used as the starting material for the paper making process, which is herein referred to as "blend material". Furthermore, it is also possible that the cellulosic starting material is "broke" or "coated broke" (recess material) which, for the purpose of the specification, shall be encompassed by the term "recycle material".

Preferably, the virgin, recycle or blend material is supplied to the pulper, wherein the corresponding pulp is manufactured mechanically (mechanical pulping, e.g. in a Hollander beater), chemically (chemical pulping) and/or by some combination of chemical and mechanical means (semi-chemical pulping).

For the purpose of the specification, the pulp, which originates from virgin material, recycle material or blend material is referred to as "virgin pulp", "recycle pulp" and "blend pulp", respectively. Further, the reaction vessels for mechanical pulping, chemical pulping and semi-chemical pulping are herein referred to as "mechanical pulper", "chemical pulper" and "semi-chemical pulper", respectively.

Several different mechanical, chemical and semi-chemical pulping methods are known to the person skilled in the art. For example, mechanical pulping methods include stone groundwood (SGW), refiner mechanical pulp (RMP), chemi-groundwood (CGW), pressurized groundwood (PGW), thermal refiner mechanical pulp (TRMP), thermo-mechanical pulp (TMP), chemi-thermo mechanical pulp (CTMP) and semi-chemical mechanical pulp (SCMP). The kraft process and sulfite process are chemical pulping methods and the neutral sulfite process (NSSC), high yield sulfite process and high yield kraft process are semi-chemical pulping methods. In general, these pulping methods are used to transform virgin material, recycle material or blend material into pulp.

A major purpose of pulping is the conversion of a solid cellulosic starting material into an aqueous composition that, e.g., can be pumped. Further, pulping can serve the purpose of separating useful material from useless material, e.g. from plastic and metal.

Typically, water is added during the mechanical, chemical or semi-chemical pulping step to the cellulosic material, i.e. to the virgin, recycle or blend material, to produce the respective cellulosic pulp, i.e. virgin, recycle or blend pulp. The respective pulp is usually a fibrous aqueous dispersion or fibrous aqueous suspension of the cellulosic material. Further, also chemicals such as an aqueous solution of sodium sulfide and sodium hydroxide, also referred to as white liquor, or a mixture of sulfurous acid and sodium bisulfite can be added to the cellulosic material to commence chemical or semi-chemical pulping.

The mechanical pulping process is typically performed by exposing the cellulosic material to mechanical force, more specifically shearing force.

The semi-chemical pulping process combines mechanical and chemical pulping methods; the cellulosic material is pulped in the presence of chemicals such as sodium sulfide, sodium hydroxide, sulfurous acid and/or sodium bisulfite while the cellulosic material is exposed to shearing force.

The chemical pulping process is typically performed in the presence of water, sodium sulfide, sodium hydroxide, sulfurous acid and/or sodium bisulfite.

According to the invention, the cationic polymer is present during the pulping step. For that purpose, the cellulosic material, i.e. the virgin, recycle or blend material, is brought into contact with the cationic polymer.

In order to perform the pulping of the cellulosic material in the presence of the cationic polymer according to the invention, it is apparent to a person skilled in the art that at least a portion of the total amount of the cationic polymer is added to the cellulosic material, i.e. to the virgin, recycle or blend material, prior to or during the pulping step (a).

In this respect, at least one portion of the total amount of the cationic polymer may be added directly at the beginning of the pulping step, i.e. directly after the virgin, recycle or blend material is supplied to the mechanical, chemical or semi-chemical pulper. Further, at least a portion of the cationic polymer may be added to the cellulosic material at any time during the pulping step, i.e. after the pulping has been commenced but prior to recovering the pulped cellulosic material from the pulper. When pulping is performed continuously, the cationic polymer can be added continuously as well.

It is apparent to a person skilled in the art that the total amount of cationic polymer may be added in bulk or in portions.

For the purpose of the specification, the term "addition in portions" means that the total amount of cationic polymer is divided in at least two portions, from which at least one portion is added to the cellulosic material prior to or during the pulping step (a).

For the purpose of the specification, the term "addition in bulk" means that the total amount of the cationic polymer is added to the cellulosic material, i.e. without dividing the total amount of the cationic polymer into portions.

Both the addition in portions and the addition in bulk of the cationic polymer may be performed punctually or continuously. For the purpose of the specification, the term "punctual addition" means the addition of the cationic polymer to the cellulosic material at a certain point in time by adding the intended amount of the cationic polymer at once. The term "continuous addition" means herein that the addition of the cationic polymer to the cellulosic material is performed over a certain time interval. For example, in case that the cationic polymer is added continuously to the cellulosic material, the cationic polymer may be slowly dropped or poured into the cellulosic material over a certain time interval. It is apparent to a person skilled in the art that the punctual addition represents a fast addition step, whereas the continuous addition is considerably slower than the punctual addition.

At least one portion of the cationic polymer may be added to the cellulosic material, i.e. to the virgin, recycle or blend material, before it enters the pulper. In this embodiment, the cationic polymer and the cellulosic material are already brought into contact with one another before pulping is initiated. After introducing the mixture comprising the cellulosic material and at least one portion of the cationic polymer to the pulper, further portions of the cationic polymer may be added at any time after the pulping step (a) has been commenced.

Typically, the pulping step (a) may take several minutes to several hours. Preferably, at least one portion of the total amount of the cationic polymer is added to the cellulosic material during the first half of the pulping period.

For the purpose of the specification, the term "pulping period" is defined as the total time the pulping step is performed.

For example, in case that the pulping step takes a total time of 1 hour (pulping period), the cationic polymer may be added in bulk or in portions, punctually or continuously to the pulper at any point of time or during any time interval, e.g., up to 30 minutes after the pulping step has been commenced.

Typically, water is added to the cellulosic material, i.e. to the virgin, recycle or blend material, prior to and/or during the pulping step. At least a portion of the total amount of the cationic polymer may be dissolved, dispersed or suspended in said water.

In a preferred embodiment, the total amount of cationic polymer is added to the cellulosic material during the pulping step (a) in bulk or in portions, punctually or continuously; i.e. 100 wt.-% of the total amount of the cationic polymer is added to the cellulosic material, i.e. to the virgin, recycle or blend material, during the pulping step (a).

In a preferred embodiment, the cationic polymer is dosed to the cellulosic material prior to or during the pulping step (a) to a final concentration of at least 100 g/metric ton or at least 250 g/metric ton, more preferably of at least 500 g/metric ton or at least 750 g/metric ton, even more preferably of at least 1,000 g/metric ton, most preferably of at least 1,250 g/metric ton, and in particular of at least 1,500 g/metric ton, based on the overall composition containing the cellulosic material. More preferably, the cationic polymer is dosed to the cellulosic material prior to or during the pulping step (a) to a final concentration of from 500 to 7,500 g/ metric ton, more preferably of from 750 to 5,000 g/metric ton, even more preferably of from 1,000 to 2,500 g/ metric ton, and in particular of from 1,250 to 2,000 g/ metric ton based on the overall composition containing the cellulosic material.

In a preferred embodiment, preferably when the cationic polymer is employed in solid state, e.g. as a granular material, the cationic polymer is dosed to the cellulosic material to a concentration of 1,500±750 g/ metric ton, more preferably 1,500±500 g/ metric ton, still more preferably 1,500±400 g/ metric ton, yet more preferably 1,500±300 g/ metric ton, most preferably 1,500±200 g/ metric ton, and in particular 1,500±100 g/ metric ton, based on the overall composition containing the cellulosic material. In another preferred embodiment, preferably when the cationic polymer is employed in emulsified state, e.g. as a water-in-oil emulsion, the cationic polymer is dosed to the cellulosic material to a concentration of 2,500±750 g/ metric ton, more preferably 2,500±500 g/ metric ton, still more preferably 2,500±400 g/ metric ton, yet more preferably 2,500±300 g/ metric ton, most preferably 2,500±200 g/ metric ton, and in particular 2,500±100 g/ metric ton, based on the overall composition containing the cellulosic material and related to the polymer content, i.e. not to the water and oil content of the water-in-oil emulsion.

In a preferred embodiment, the stock consistency of the cellulosic material in pulping step (a) is within the range of from 3.0 to 6.0%, more preferably of from 3.3 to 5.5%, even more preferably of from 3.6 to 5.1 %, most preferably of from 3.9 to 4.8%, and in particular of from 4.2 to 4.6%. In another preferred embodiment, the stock consistency of the cellulosic material in pulping step (a) is within the range of from 10 to 25%, more preferably of from 12 to 23%, even more preferably of from 13 to 22%, most preferably of from 14 to 21%, and in particular of from 15 to 20%. Suitable methods for measuring the stock consistency of cellulosic materials are known to the skilled person. In this regard it can be referred to e.g. M.H. Waller, Measurement and Control of Paper Stock Consistency, Instrumentation Systems &, 1983; H. Holik, Handbook of Paper and Board, Wiley-VCH, 2006.

Preferably, before the cationic polymer is added, the zeta potential of the cellulosic material is within the range of from -45 mV to +30 mV, more preferably -40 mV to +20 mV, still more preferably -35 mV to +10 mV, yet more preferably -30 mV to ±0 mV, most preferably -25 mV to -5 mV and in particular -20 mV to -10 mV. Preferably, the cationic polymer is added in an amount so that the addition of the cationic polymer causes an increase of the zeta potential by at least 1 mV, more preferably at least 2 mV, still more preferably at least 3 mV, yet more preferably at least 4 mV, most preferably at least 5 mV and in particular at least 6 mV. For example, before the cationic polymer is added, the zeta potential of the cellulosic material may be -15 mV and after the addition of the cationic polymer it is increased to a value of, e.g., -10 mV to -5 mV. The charge of the aqueous composition, i.e. the dispersion/stabilising system is commonly verified by measuring the zeta potential. A positive value of the zeta potential indicates a cationic dispersion, whereas a negative zeta potential indicates an anionic dispersion. Suitable methods for measuring the zeta potential are known to the skilled person. In this regard it can be referred to e.g. H. Holik, Handbook of Paper and Board, Wiley-VCH, 2006.

Pulping step (a) may be performed at ambient conditions.

In a preferred embodiment, pulping step (a) is performed at elevated temperature. Preferably, pulping step (a) is performed at a temperature within the range of from 20°C to 90°C, more preferably of from 20°C to 50°C.

In a preferred embodiment, pulping step (a) is performed at a pH value of from 5 to 13, more preferably 6 to 12, still more preferably 7 to 11, yet more preferably 7 to 10 and most preferably 7 to 9. The desired pH value may be adjusted by the addition of acids and bases, respectively.

In a preferred embodiment according to the invention, pulping step (a) is performed in the presence of a cationic polymer and further auxiliaries. Said further auxiliaries may comprise, but are not limited to inorganic materials, such as talkum, siliceous materials, alum, polyaluminium chloride, aluminium chloro hydrate, and the like.

The auxiliary may be a siliceous material which is in the form of an anionic microparticulate composition. The siliceous materials include silica based particles, silica microgels, colloidal silica, silica sols, silica gels, polysilicates, aluminosilicates, polyaluminosilicates, borosilicates, polyborosilicates, zeolites and clays. The clays are preferably swelling clays, for instance this may be typically a bentonite type clay. The preferred clays are swellable in water and include clays which are naturally water swellable or clays which can be modified, for instance by ion exchange to render them water swellable. Suitable water swellable clays include but are not limited to clays often referred to as hectorite, smectites, montmorillonites, nontronites, hormites, saponite, sauconite, attapulgites and sepiolites. In a preferred embodiment the auxiliary is bentonite.

Alternatively, the auxiliary is a colloidal silica, selected from polysilicates and polyaluminosilicates. This includes polyparticulate polysilicic microgels of surface area in excess of 1000 m²/g, for instance water soluble polyparticulate polyaluminosilicate microgels or aluminate polysilicic acid. In addition, the flocculating material may be a colloidal silicic acid or a colloidal silica.

The auxiliary may also be a colloidal borosilicate. The colloidal borosilicate may be prepared by contacting a dilute aqueous solution of an alkali metal silicate with a cation exchange resin to produce a silicic acid and then forming a heel by mixing together a dilute aqueous solution of an alkali metal borate with an alkali metal hydroxide to form an aqueous solution containing B₂O₃.

The pulping may also be performed in the presence of enzymes such as amylases, esterases and/or lipases that are commercially available (e.g., Buzyme^{®} 2515, Buzyme^{®} 2517, Resinase A2X, Novocor ADL, Pancreatic Lipase 250, Lipase G-1000, Greasex 50L, Greasex 100L), which may be preferably used to control the organic contaminants present in the cellulosic materials. The use of such enzymes in pulping processes is for example disclosed in US 6,471,826.

After the pulping step (a), the pulped cellulosic material, i.e. the virgin pulp, recycle pulp or blend pulp, which contains at least one portion of the cationic polymer, may be subjected to a washing step, before being supplied to further process steps of the paper-making process. This washing step typically includes the washing of the cellulosic fibers of the pulped cellulosic material with water. Preferably, if washing is performed, the conditions of washing are properly adjusted so that a substantial amount of the cationic polymer remains with the cellulosic material, i.e. is not separated therefrom.

Typically, the pulped cellulosic material, i.e. virgin, recycle or blend pulp, may be subjected to further process steps, which follow the pulping step (a). These steps comprise, but are not limited to
(b) de-inking the cellulosic material; and/or
(c) blending the cellulosic material; and/or
(d) bleaching the cellulosic material; and/or
(e) refining the cellulosic material; and/or
(f) screening and/or cleaning the cellulosic material; and
(g) supplying the cellulosic material to a paper machine.

In this respect, it should be emphasized that the aforementioned steps (b) to (f) are optional only, meaning that any one, any two, any three or any four of steps (b) to (f) may be omitted. It is also possible that the five steps (b) to (f) are omitted during the paper making process.

Devices that are suitable for the subsequent steps after pulping step (a) are known to the skilled person. For example, the cellulosic material may be pumped from the pulper into a stock vat, a mixing vat and/or a machine vat before it is supplied to the paper machine (i.e. to the so-called "constant part" of the paper machine).

The temporal sequence of steps (b) to (f) can be freely chosen, meaning that the temporal sequence of steps (b) to (f) does not necessarily follow the alphabetical order as indicated. Preferably, however, the order is alphabetical.

Further process steps such as storing the cellulosic material in storage tanks or additional washing and/or screening steps may be incorporated after any of the process steps (a) to (f).

In a preferred embodiment, the temporal sequence of the process steps is selected from the group consisting of (a)→(g); (a)→(b)→(g); (a)→(c)→(g); (a)→(d)→(g); (a)→(e)→(g);
(a)→(f)→(g); (a)→(b)→(c)→(g); (a)→(b)→(d)→(g); (a)→(b)→(e)→(g); (a)→(b)→(b)→(g);
(a)→(c)→(d)→(g); (a)→(c)→(e)→(g); (a)→(c)→(f)→(g); (a)→(d)→(e)→(g); (a)→(d)→(f)→(g);
(a)→(e)→(f)→(g); (a)→(b)→(c)→(d)→(g); (a)→(b)→(c)→(e)→(g); (a)→(b)→(c)→(f)→(g);
(a)→(b)→(d)→(e)→(g); (a)→(b)→(d)→(f)→(g); (a)→(c)→(d)→(e)→(g);
(a)→(c)→(d)→(f)→(g); (a)→(c)→(e)→(f)→(g); (a)→(d)→(e)→(f)→(g);
(a)→(b)→(c)→(d)→(e)→(g); (a)→(b)→(c)→(d)→(f)→(g); (a)→(b)→(c)→(e)→(e)→(g);
(a)→(b)→(d)→(e)→(f)→(g); (a)→(c)→(d)→(e)→(f)→(g); and
(a)→(b)→(c)→(d)→(e)→(f)→(g).
wherein, for the purpose of the specification, the symbol "→" means "followed by"; and further process steps such as storing the cellulosic material in storage tanks or additional washing and/or screening steps may be incorporated after any one of the process steps (a) to (f).

At least one portion of the cationic polymer is added prior to or during the pulping step (a). Provided that the cationic polymer which was initially added during pulping step (a) is not completely removed in the subsequent steps, the cationic polymer is also present in the process steps (b), (c), (d), (e), (f) and (g), if any, which follow the pulping step (a).

In a preferred embodiment, at least one portion of the remainder of the total amount of the cationic polymer is added to the cellulosic material during any of steps (b), (c), (d), (e), (f) and/or (g). For example, 50 wt.-% of the total amount of the cationic polymer may be added in portions or in bulk, punctually or continuously prior to and/or during the pulping step (a) and the remaining 50 wt.-% of the total amount of the cationic polymer may be added in portions or in bulk, punctually or continuously, prior to, during and/or after the process steps (b), (c), (d), (e), (f) and/or (g).

A person skilled in the art is aware that after each of the process steps (a) to (f), the mixture comprising the cellulosic material and the cationic polymer may be supplied to storage tanks, before it is re-introduced to further process steps of the paper making process.

It is also apparent to a person skilled in the art that at least one portion of the remainder of the total amount of the cationic polymer may be added to the cellulosic material, when it is stored in storage tanks after any of process steps (a), (b), (c), (d), (e) and (f).

In general, the pulping step (a) is performed well before step (g). In a preferred embodiment, at least one portion of the cationic polymer is added prior to or during the pulping step to the cellulosic material, i.e. to the virgin, recycle or blend material. Said addition takes place preferably at least 5 minutes, more preferably at least 10 minutes, even more preferably at least 20 minutes, most preferably at least 30 minutes, and in particular at least 40 minutes before the cellulosic material is supplied to the wet end of the paper machine, e.g. through the flow box, i.e. before it is supplied to step (g). In a preferred embodiment of the method according to the invention, the time period during which the cellulosic material is in contact with cationic polymer is at least 5 minutes, more preferably at least 10 minutes, even more preferably at least 20 minutes, most preferably at least 30 minutes, and in particular at least 40 minutes.

The duration of pulping step (a) is not critical to the invention. Preferably, pulping step (a) takes at least 1 minute, more preferably at least 2 minutes, still more preferably at least 3 minutes, yet more preferably at least 4 minutes, most preferably 5 to 30 minutes and in particular 5 to 15 minutes.

After the pulping step, the pulp according to the invention may be subjected to a de-inking step (b), wherein the virgin pulp, recycle pulp or blend pulp is de-inked, preferably in the presence of the cationic polymer.

The de-inking (b) is performed in a so-called de-inker, also referred to as a de-inking cell, i.e. a reaction vessel wherein the ink is removed from the recycle or blend pulp in the presence of the cationic polymer. Typically, washing and flotation are the two main processes applied for the de-inking of the recycle or blend pulp.

De-inking by washing is typically performed by adding large quantities of water to the cellulosic material to form a slurry. The water containing the dispersed ink is drained through slots or screens that are permeable for the dispersed ink particles, whereas the cellulosic material is not able to pass through the slots or screens.

De-inking by flotation is typically performed by adding water to the cellulosic material to form a slurry. Subsequently, surfactants are added and air is blown through the slurry of cellulosic material. The removed ink is trapped in a foam layer, which is continuously removed from the slurry of cellulosic material.

After the pulping step, the pulp according to the invention may be subjected to a blending step (c). The blending (c), also referred to as stock preparation, is typically performed in a so-called blend chest, i.e. a reaction vessel wherein additives such as dyes, fillers (e.g., talc or clay) and sizing agents (e.g., rosin, wax, starch, glue) are added to the pulped cellulosic material, preferably to virgin pulp, recycle pulp or blend pulp, preferably in the presence of the cationic polymer. Fillers are preferably added to improve printing properties, smoothness, brightness, and opacity. Sizing agents typically improve the strength and water resistance of the final paper, paperboard and/or cardboard. The sizing may also be performed on the paper machine, by surface application on the sheet.

After the pulping step, the pulp according to the invention may be subjected to a bleaching step (d). Typically, the bleaching (d) is performed to whiten the pulped cellulosic material, preferably in the presence of the cationic polymer. The cellulosic material may still have a tan color because of the lignin remaining after the pulping step (a). In said bleaching process, chemical bleaches such as sodium hypochlorite are typically added to the pulped cellulosic material to remove the color.

After the pulping step, the pulp according to the invention may be subjected to a refining step (e). The refining (e) is preferably performed in a so-called pulp beater or refiner by fibrillating the fibers of the cellulosic material, preferably in the presence of the cationic polymer. The purpose is preferably to brush and raise fibrils from fiber surfaces for better bonding to each other during sheet formation resulting in stronger paper. Pulp beaters (e.g., Hollander beater, Jones-Bertram beater, etc.) process batches of pulp while refiners (e.g., Chaflin refiner, Jordan refiner, single or double disk refiners, etc.) process pulp continuously.

After the pulping step, the pulp according to the invention may be subjected to a screening step (f). The screening (f) is preferably applied to remove undesirable fibrous and non-fibrous material from the cellulosic material, preferably in the presence of the cationic polymer, preferably by the use of rotating screens and centrifugal cleaners.

Thereafter, typically in the final step of the paper-making process, the cellulosic material is supplied to a paper machine, where it typically enters the wet end of the paper machine. For the purpose of the specification the term "paper-machine" preferably refers to any device or component thereof that basically serves the formation of sheets from an aqueous suspension of the cellulosic material. For example, the pulper is not to be regarded as a component of the paper-machine. The first section of the wet end of the paper-machine is typically the so-called wire section, where the cellulosic material is supplied through a flow box to the wire section and distributed evenly over the whole width of the paper machine and a significant amount of water of the aqueous dispersion or aqueous suspension of the cellulosic material is drained away. Subsequently, the cellulosic material enters preferably the press section of the paper machine where remaining water is squeezed out of the cellulosic material, which forms a web of cellulosic material, which then in turn is preferably supplied to the dry end of the paper machine.

The so-called dry end of the paper-machine comprises preferably a first drying section, a size press, a second drying section, a calender, and "jumbo" reels. The first and the second drying section comprise preferably a number of steam-heated drying cylinders, where synthetic dryer fabrics may carry the web of cellulosic material round the cylinders until the web of cellulosic material is virtually moist-free. In the size press, an aqueous solution of starch may be added to the surface of the web of the cellulosic material in order to improve the surface for printing purposes. Preferably, the web of cellulosic material is then supplied to the calender, where it is smoothed and polished. Subsequently, the cellulosic material is typically reeled up in the so-called "jumbo" reel section.

In a preferred embodiment, at least 50 wt.-%, more preferably at least 60 wt.-%, even more preferably at least 70 wt.-%, most preferably at least 80 wt.-% and in particular at least 90 wt.-% of the cationic polymer, which is present during step (a), is still present in step (g) of the paper making process.

In case that the loss of cationic polymer during the paper making process is too high, further portions of the cationic polymer may be added during any of the process steps (b), (c), (d), (e) and/or (f).

A second cationic polymer that differs in nature may be also added to the cellulosic material prior to, during or after the process steps (b) to (f) and/ or after the cellulosic material has been supplied to the paper machine. The second cationic polymer may differ in average molecular weight and/or cationicity and/or chemical nature of monomers.

It has been surprisingly found that the cationic polymer, which is added to step (a), reduces not only the COD of the resulting effluents such as waste water but can also improve the strength properties of the final paper products obtained in step (g). This indicates that the cationic polymer is stable throughout the paper making process.

In a preferred embodiment, the pulping of the cellulosic material in the presence of the cationic polymer according to the invention results in a decrease in the COD value of the waste water of at least 3.0% or of at least 5.0%, more preferably of at least 10% or of at least 15%, even more preferably of at least 20% or of at least 25%, most preferably of at least 30% or of at least 40%, and in particular of at least 50% or of at least 60% or of at least 70%, when compared to the COD of waste water, which is obtained when the cellulosic material is pulped in the absence of the cationic polymer.

The COD value is preferably measured in accordance with ASTM D1252 or ASTM D6697.

In another preferred embodiment, the pulping of the cellulosic material in the presence of the cationic polymer according to the invention results in an increase in the Scott Bond value of the final paper product of at least 2.0% or of at least 5.0%, more preferably of at least 10% or of at least 15%, even more preferably of at least 20% or of at least 25%, most preferably of at least 30% or of at least 40%, and in particular of at least 50% or of at least 60% or of at least 70%, when compared to the Scott Bond value measured for the final paper product made from cellulosic material which was pulped in the absence of the cationic polymer.

The Scott Bond value is preferably measured in accordance with TAPPI T 833 pm-94.

For the purpose of the specification, the term "cationic polymer" refers to water-soluble and/or water-swellable polymers, which have a positive net charge. The cationic polymers may be branched or unbranched, crosslinked or not crosslinked, grafted or not grafted. The cationic polymers according to the invention are preferably neither branched, nor crosslinked, nor grafted.

A person skilled in the art knows the meaning of the terms "branched polymer", "unbranched polymer", "crosslinked polymer" and "graft polymer". Definitions for these terms may be found preferably in A. D. Jenkins et al. Glossary of Basic Terms in Polymer Science. Pure & Applied Chemistry 1996, 68, 2287-2311.

For the purpose of the specification the term "water-swellable" preferably refers to the increase in volume of polymer particles associated with the uptake of water (cf. D. H. Everett. Manual of Symbols and Terminology for Physicochemical Quantities and Units. Appendix II, Part I: Definitions, Terminology and Symbols in Colloid and Surface Chemistry. Pure & Applied Chemistry 1972, 31, 579-638). The swelling behavior of polymers may be measured at different temperatures and pH values in water. The swollen weights of the polymers are determined at intervals, after removal of the surface water, until equilibrium swelling is attained. The percent swelling is preferably calculated by the following equation: %swelling = 100 × [(Wₜ - W₀) /W₀], where W₀ is the initial weight and Wₜ the final weight of the gel at time t (cf. I. M. EI-Sherbiny et al. Preparation, characterization, swelling and in vitro drug release behaviour of poly[N-acryloylglycine-chitosan] interpolymeric pH and thermally-responsive hydrogels. European Polymer Journal 2005, 41, 2584-2591).

The water-swellable cationic polymers according to the invention may display a %swelling of at least 2.5%, preferably of at least 5.0%, more preferably of at least 7.5%, still more preferably of at least 10%, most preferably of at least 15%, and in particular of at least 20% measured in demineralized water at 20 °C and pH 7.4 in phosphate buffer after equilibrium swelling is attained.

For the purpose of the specification, the term "polymer" preferably refers to a material composed of macromolecules containing >10 monomer units (cf. G. P. Moss et al. Glossary of Class Names of Organic Compounds and Reactive Intermediates Based on Structure. Pure & Applied Chemistry 1995, 67, 1307-1375).

The cationic polymer according to the invention may consist of a single type of cationic polymer are may comprise different cationic polymers.

The cationic polymers may be homopolymers, which preferably comprise cationic monomer units as the only monomer component. Further, the cationic polymers may also be copolymers, i.e. bipolymers, terpolymers, quaterpolymers, etc., which comprise, e.g., different cationic monomer units or cationic as well as non-ionic monomer units.

For the purpose of the specification, the term "homopolymer" preferably refers to a polymer derived from one species of monomer and the term "copolymer" preferably refers to a polymer derived from more than one species of monomer. Copolymers that are obtained by copolymerization of two monomer species are termed bipolymers, those obtained from three monomers terpolymers, those obtained from four monomers quaterpolymers, etc. (cf. A. D. Jenkins et al. Glossary of Basic Terms in Polymer Science. Pure & Applied Chemistry 1996, 68, 2287-2311).

In case that the cationic polymer is a copolymer, it is preferably a random copolymer, a statistical copolymer, a block copolymer, a periodic copolymer or an alternating copolymer, more preferably a random copolymer.

A person skilled in the art knows the meaning of the terms "random copolymer", "statistical copolymer", "periodic copolymer", "block copolymer" and "alternating copolymer". Definitions for these terms may be found preferably in A. D. Jenkins et al. Glossary of Basic Terms in Polymer Science. Pure & Applied Chemistry 1996, 68, 2287-2311.

For the purpose of the specification, the expression "at least two different cationic polymers" refers to a mixture of cationic polymers comprising more than one, preferably two, three or four cationic polymers that differ from each other in their monomer units, molecular weight, polydispersity and/or tacticity, etc.

Preferably, the cationic polymer comprises monomer units that are derived from radically polymerizable, ethylenically unsaturated monomers. Therefore, in a preferred embodiment the polymer backbone of the cationic polymer is a carbon chain that is not interrupted by heteroatoms, such as nitrogen or oxygen. Preferably, the water-soluble or water-swellable cationic polymer is derived from ethylenically unsaturated monomers, preferably from acrylic acid derivatives, such as acrylic acid esters, acrylic acid amides, acrylonitrile, and the like. Preferably, the cationic polymer is a derivative of a poly(meth)acrylate. In this regard, the term "(meth)acryl" shall refer to methacryl as well as to acryl.

Preferably, the degree of polymerization of the cationic polymer is at least 90%, more preferably at least 95%, still more preferably at least 99%, yet more preferably at least 99,9%, most preferably at least 99,95% and in particular at least 99,99%.

Preferably, the cationic polymer has a comparably high molecular weight. Preferably, the weight average molecular weight M_{w} of the cationic polymer, that can be measured e.g. by GPC, is at least 100,000 g/mol or at least 250,000 g/mol, more preferably at least 500,000 g/mol or at least 750,000 g/mol, still more preferably at least 1,000,000 g/mol or at least 1,250,000 g/mol, yet more preferably at least 1,500,000 g/mol or at least 2,000,000 g/mol, most preferably at least 2,500,000 g/mol or at least 3,000,000 g/mol and in particular within the range of from 1,000,000 g/mol to 10,000,000 g/mol.

Preferably, the molecular weight dispersity M_{w}/Mₙ of the cationic polymer is within the range of from 1.0 to 4.0, more preferably 1.5 to 3.5 and in particular 1.8 to 3.2.

In a preferred embodiment the cationic polymer is a positively charged material composed of macromolecules containing >10 monomer units, wherein at least one monomer is a cationic monomer of general formula (V) as defined below.

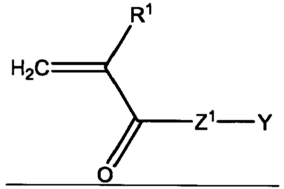

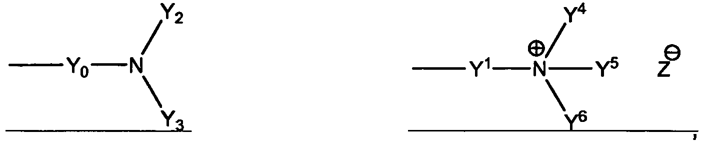

Quaternized dialkylaminoalkyl(meth)-acrylamides with C₁ to C₃-alkyl or C₁ to C₃-alkylene groups are preferably used as cationic monomers for manufacturing the water-soluble or water-swellable polymers according to the invention. The methyl chloride-quaternized, ethyl chloride-quaternized, propyl chloride-quaternized, or isopropyl-quaternized ammonium salts N,N-dimethylaminoethyl(meth)acrylamide and/or N,N-dimethylaminopropyl(meth)acrylamide are more preferably used. Instead of the alkyl chlorides (i.e., methyl chloride, ethyl chloride, propyl chloride, and isopropyl chloride), the corresponding bromides, iodides, sulfates, etc. may also be used for the quaternization of said N,N-dialkylaminoalkyl(meth)acrylamide derivatives.

In a preferred embodiment of the invention, the cationic polymer contains cationic monomer units selected from the group consisting of DIMAPA-Quat (quaternized N,N-dimethylaminopropyl acrylamide) as well as non-ionic monomer units selected from the group consisting of acrylamide and methacrylamide.

The cationic polymers may be also copolymers, i.e. bipolymers, terpolymers, quaterpolymers, etc., which comprise, e.g., at least two different cationic monomer units or cationic as well as non-ionic monomer units and/or amphiphilic monomer units.

For the purpose of the specification, the term "non-ionic monomer units" preferably refers to monomers of the general formula (II): 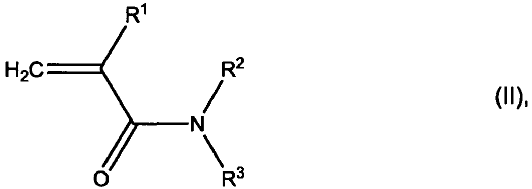 wherein
R¹ stands for hydrogen or methyl, and
R² and R³ stand, independently of each other, for hydrogen, alkyl with 1 to 5 carbon atoms, or hydroxyalkyl with 1 to 5 carbon atoms.

The non-ionic monomers (meth)acrylamide, N-methyl(meth)acrylamide, N-isopropyl-(meth)acrylamide or N,N substituted (meth)acrylamides such as N,N,-dimethyl(meth)-acrylamide, N,N-diethyl(meth)acrylamide, N-methyl-N-ethyl(meth)acrylamide or N-hydroxyethyl(meth)acrylamide are preferably used as comonomers for manufacturing the water-soluble or water-swellable cationic polymers according to the invention. The non-ionic monomer acrylamide or methacrylamide is more preferably used.

For the purpose of the specification, the term "amphiphilic monomer units" preferably refers to monomers of the general formula (III) and (IV): 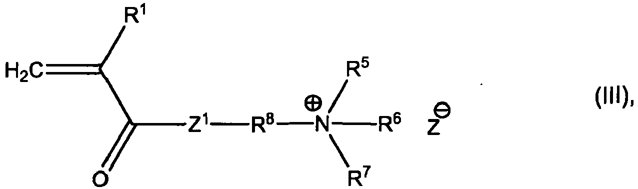 wherein
Z¹ stands for O, NH or NR⁴, wherein R⁴ stands for hydrogen or methyl,
R¹ stands for hydrogen or methyl,
R⁵ and R⁶ stand, independently of each other, for alkyl with 1 to 6 carbon atoms,
R⁷ stands for alkyl, aryl and/or aralkyl with 8 to 32 carbon atoms,
R⁸ stands for alkylene with 1 to 6 carbon atoms, and
Z⁻ stands for halogen, pseudohalide ions, methyl sulfate or acetate;
   or 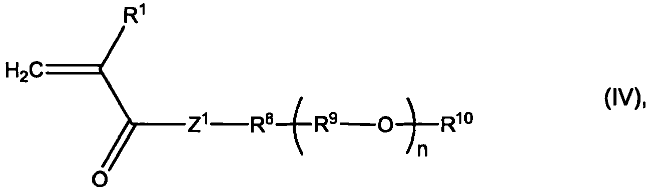 wherein
Z¹ stands for O, NH or NR⁴, wherein R⁴ stands for alkyl with 1 to 4 carbon atoms,
R¹ stands for hydrogen or methyl,
R⁸ stands for alkylene with 1 to 6 carbon atoms,
R⁹ stands for alkylene with 2 to 6 carbon atoms, and
R¹⁰ stands for hydrogen, alkyl, aryl, and/or aralkyl with 8 to 32 carbon atoms, and
n stands for an integer between 1 to 50.

The conversion products of (meth)acrylic acid or (meth)acrylamide with polyethylene glycols (10 to 40 ethylene oxide units) that have been etherified with fatty alcohol are preferably used as amphiphilic monomers for manufacturing the water-soluble or water-swellable cationic polymer according to the invention.

For the purpose of the specification, the term "amphiphilic monomer units" preferably refers to charged, preferably positively charged, or uncharged monomers, which possess both a hydrophilic and a hydrophobic group (cf. D. H. Everett. Manual of Symbols and Terminology for Physicochemical Quantities and Units. Appendix II, Part I: Definitions, Terminology and Symbols in Colloid and Surface Chemistry. Pure & Applied Chemistry 1972, 31, 579-638).

In a preferred embodiment, the cationic polymers contain at least 10 wt.-%, more preferably at least 25 wt.-%, still more preferably at least 50 wt.-%, most preferably at least 75 wt.-%, and in particular 100 wt.-% of cationic monomer units. More preferably, the cationic polymers contain 10-100 wt.-%, more preferably 15-90 wt.-%, still more preferably 20-80 wt.-%, most preferably 25-70 wt.-%, and in particular 30-60 wt.-% of cationic monomer units. In another preferred embodiment, the cationic polymers contain at least 1.0 mole.-%, more preferably at least 2.5 mole.-%, still more preferably at least 5.0 mole.-%, most preferably at least 7.5 mole.-%, and in particular at least 10 mole.-% of cationic monomer units. More preferably, the cationic polymers contain 2.5-40 mole.-%, more preferably 5.0-30 mole.-%, still more preferably 7.5-25 mole.-%, most preferably 8.0-22 mole.-%, and in particular 9.0-20 mole.-% of cationic monomer units.

In a particular preferred embodiment, the cationic polymer is a copolymer of acrylamide or methacrylamide with quaternized dialkylaminoalkyl(meth)acrylamides; more preferably a copolymer of acrylamide with DIMAPA-Quat (quatemized N,N-dimethylaminopropyl acrylamide; wherein the content of cationic monomers is preferably within the range of from 10 to 99 wt.-%, more preferably 15 to 90 wt.-%, still more preferably 20 to 80 wt.-%, most preferably 25 to 70 wt.-%, and in particular 30 to 60 wt.-%, based on the total weight of the cationic polymer.

The cationic polymer is derived from identical or different monomers according to general formula (V), 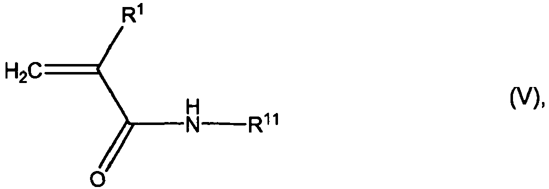 wherein
R¹ stands for -H or -CH₃, and
R¹¹ stands for C₂-C₆-alkylene-N⁺(C₁-C₃-alkyl)₃ X⁻, where X⁻ is a suitable anion, such as Cl⁻, Br⁻, SO₄²⁻, and the like.

Preferably, the cationic polymer does not contain any vinylamine units or derivatives thereof, such as acylates (e.g. vinylamine, mono- or di-N-alkylvinylamine, quaternized N-alkyl vinylamine, N-formyl vinylamine, N-acetyl vinylamine), and the like.

It has been surprisingly found that the amide moieties in the side chain of the resultant polymer withstand the conditions of paper manufacture, whereas similar side chains, such as esters, tend to decompose (saponification), at least to a certain extent, even if no esterases are present. As the cationic charge is located in the side chain of the monomers according to general formula (V), saponification would lead to a loss of cationicity. This seems to be the reason why quaternized dialkylaminoalkyl(meth)acrylates are - although still effective - less effective than quaternized dialkylaminoalkyl(meth)acrylamides. Therefore, homopolymers of quaternized dialkylaminoalkyl(meth)acrylamides or copolymers of quaternized dialkylaminoalkyl(meth)acrylamides and (meth)acrylamides are preferably employed as cationic polymers.

The cationic polymer according to the invention preferably comprises one cationic polymer, preferably as the only polymer component; or two different cationic polymers, preferably as the only polymer components; or three cationic polymers, preferably as the only polymer components; or four cationic polymers, preferably as the only polymer components; or even more than four cationic polymers, preferably as the only polymer components.

In a particularly preferred embodiment, the cationic polymer according to the invention contains at least one cationic polymer A and/or at least one cationic polymer B as defined here below.

Cationic polymer A is preferably high-molecular with an average molecular weight (M_{w}) of ≥ 1.0×10⁶ g/mol, as measured by the GPC method. Cationic polymer B is preferably a low-molecular polymer with an average molecular weight (M_{w}) of at most 500,000 g/mol, more preferably of at most 400,000 g/mol, still more preferably of at most 300,000 g/mol, most preferably of at most 200,000 g/mol, as measured by the GPC method.

Thus, it is preferred that the average molecular weight of cationic polymer A is greater than the average molecular weight of cationic polymer B. The ratio of the average molecular weights of cationic polymer A to cationic polymer B may be at least 4.0, preferably at least 10, more preferably at least 20, still more preferably at least 25, most preferably at least 30, and in particular at least 40.

In a particularly preferred embodiment, the cationic polymer according to the invention comprises at least one water-soluble or water-swellable cationic polymer A and/or at least one water-soluble or water-swellable cationic polymer B as the only polymer components.

The preparation of the water-soluble and water-swellable cationic polymers is known to the person skilled in the art. For example, the polymers according to the invention may be prepared by polymerization techniques according to the procedures described in WO 2005/092954, WO 2006/072295, and WO 2006/072294.

Depending on the procedure used for the preparation of the water-soluble or water-swellable cationic polymer, the respective polymer products may comprise further substances such as polyfunctional alcohols, water-soluble salts, chelating agents, free-radical initiators and/or their respective degradation products, reducing agents and/or their respective degradation products, oxidants and/or their respective degradation products, etc.

The cationic polymer according to the invention may be solid, in the form of a solution, dispersion, emulsion or suspension.

For the purpose of the specification, the term "dispersion" comprises preferably aqueous dispersions, water-in-oil dispersions and oil-in-water dispersions. A person skilled in the art knows the meaning of these terms; in this respect it may be also referred to EP 1 833 913, WO 02/46275 and WO 02/16446.

Preferably, the cationic polymer according to the invention is dissolved, dispersed, emulsified or suspended in a suitable solvent. The solvent may be water, an organic solvent, a mixture of water with at least one organic solvent or a mixture of organic solvents.

In another preferred embodiment, the cationic polymer according to the invention is in the form of a solution, wherein the cationic polymer is dissolved in water as the only solvent or in a mixture comprising water and at least one organic solvent.

More preferably, the cationic polymer is in the form of a dispersion, an emulsion or a suspension, wherein the cationic polymer is dispersed, emulsified or suspended in a mixture comprising water and at least one organic solvent. Preferably, the cationic polymer is in the form of a dispersion, an emulsion or a suspension, wherein the cationic polymer is dispersed, emulsified or suspended in water as the only solvent, i.e. no organic solvent is present. In another preferred embodiment of the invention, the cationic polymer is in the form of a dispersion, wherein the cationic polymer is dispersed in water as the only solvent or in a mixture comprising water and at least one organic solvent. It is especially preferred that the cationic polymer dispersion according to the invention is substantially oil-free.

In a preferred embodiment, the content of the cationic polymer according to the invention in the solution, dispersion, emulsion or suspension is at most 50 wt.-%, more preferably at most 40 wt.-%, even more preferably at most 30 wt.-%, most preferably at most 20 wt.-% and in particular at most 10 wt.-% based on the total weight of the solution, dispersion, emulsion or suspension.

Suitable organic solvents are preferably low-molecular weight alcohols (e.g., methanol, ethanol, n-propanol, iso-propanol, n-butanol, iso-butanol, sec-butanol, tert-butanol, etc.), low molecular weight ethers (e.g., dimethylether, diethylether, di-n-propylether, di-isopropylether, etc.), low molecular weight ketones (e.g. acetone, butan-2-one, pentane-2-one, pentane-3-one, etc.), low molecular weight hydrocarbons (e.g., n-pentane, n-hexane, petroleum ether, ligroin, benzene, etc.) or halogenated low molecular weight hydrocarbons (e.g., methylene chloride, chloroform, etc.) or mixtures thereof.

When the cationic polymer is employed in form of a polymer dispersion, the cationic polymer dispersion, which is preferably substantially oil-free, preferably has a density of at least 500 kg/m³, more preferably of at least 600 kg/m³, even more preferably of at least 700 kg/m³, most preferably of at least 800 kg/m³, and in particular of at least 1,000 kg/m³. More preferably, the cationic polymer dispersion, which is preferably substantially oil-free, has a density of from 550 to 2,000 kg/m³, more preferably of from 650 to 1,800 kg/m³, even more preferably of from 750 to 1,600 kg/m³, most preferably of from 850 to 1,400 kg/m³, and in particular of from 950 to 1,200 kg/m³.

In a preferred embodiment, the product viscosity of the cationic polymer dispersion according to the invention, which is preferably substantially oil-free, is at least 2,000 mPa s, more preferably at least 4,000 mPa s, even more preferably at least 6,000 mPa s, most preferably at least 7,000 mPa s, and in particular at least 10,000 mPa s. In another preferred embodiment, the cationic polymer dispersion according to the invention, which is preferably substantially oil-free, has a product viscosity of from 1,000 to 20,000 mPa s, more preferably of from 3,000 to 18,000 mPa s, even more preferably of from 5,000 to 15,000 mPa s, most preferably of from 8,000 to 12,000 mPa s, and in particular of from 9,000 to 11,000 mPa s.

When the cationic polymer is employed in form of a polymer solution, the cationic polymer solution preferably has a density of at least 500 kg/m³, more preferably of at least 600 kg/m³, even more preferably of at least 700 kg/m³, most preferably of at least 800 kg/m³, and in particular of at least 1,000 kg/m³. More preferably, the cationic polymer solution has a density of from 550 to 2,000 kg/m³, more preferably of from 650 to 1,800 kg/m³, even more preferably of from 750 to 1,600 kg/m³, most preferably of from 850 to 1,400 kg/m³, and in particular of from 950 to 1,100 kg/m³.

In a preferred embodiment, the product viscosity of the cationic polymer solution is at least 200 mPa s, more preferably at least 400 mPa s, even more preferably at least 800 mPa s, most preferably at least 1,500 mPa s, and in particular at least 2,000 mPa s. In another preferred embodiment, the cationic polymer solution has a product viscosity of from 300 to 3,000 mPa s, more preferably of from 500 to 2,750 mPa s, even more preferably of from 1,000 to 2,500 mPa s, most preferably of from 1,500 to 2,250 mPa s, and in particular of from 1,900 to 2,100 mPa s.

When the cationic polymer is employed in form of a polymer emulsion, the cationic polymer emulsion preferably has a density of at least 500 kg/m³, more preferably of at least 600 kg/m³, even more preferably of at least 700 kg/m³, most preferably of at least 800 kg/m³, and in particular of at least 1,000 kg/m³. More preferably, the cationic polymer emulsion has a density of from 550 to 2,000 kg/m³, more preferably of from 650 to 1,800 kg/m³, even more preferably of from 750 to 1,600 kg/m³, most preferably of from 850 to 1,400 kg/m³, and in particular of from 950 to 1,100 kg/m³.

In a preferred embodiment, the product viscosity of the cationic polymer emulsion is at least 1,000 mPa s, more preferably at least 1,300 mPa s, even more preferably at least 1,500 mPa s, most preferably at least 1,700 mPa s, and in particular at least 1,900 mPa s. In another preferred embodiment, the cationic polymer emulsion has a product viscosity of from 1,000 to 3,500 mPa s, more preferably of from 1,200 to 3,250 mPa s, even more preferably of from 1,400 to 3,000 mPa s, most preferably of from 1,600 to 2,700 mPa s, and in particular of from 1,800 to 2,200 mPa s.

The cationic polymer according to the invention may also be a solid, i.e. in particulate form, such as in the form of granulates, pellets or powders.

Preferably, the cationic polymer granulate has a bulk density of at least 100 kg/m³, more preferably of at least 250 kg/m³, even more preferably of at least 400 kg/m³, most preferably of at least 500 kg/m³, and in particular of at least 600 kg/m³. More preferably, the cationic polymer granulate has a bulk density of from 100 to 1,000 kg/m³, more preferably of from 200 to 900 kg/m³, even more preferably of from 300 to 800 kg/m³, most preferably of from 450 to 700 kg/m³, and in particular of from 550 to 675 kg/m³.

Preferably, the solid cationic polymer particles (i.e., granules, pellets, powder particles, etc.) have an average diameter of ≤ 10,000 µm, preferably of ≤ 5,000 µm, more preferably of ≤ 3,000 µm, still more preferably of ≤ 2,000 µm, and in particular of ≥ 1,000 µm. More preferably, the cationic polymer particles according to the invention have an average diameter of from 100 to 5,000 µm, preferably of from 100 to 4,000 µm, more preferably of from 100 to 3,000 µm, still more preferably of from 100 to 2,000 µm, and in particular of from 100 to 1,000 µm.

The cationic polymer in the form of a solution, dispersion, emulsion, suspension, granulate, pellets, or powder is preferably dispersed, emulsified, suspended, dissolved or diluted in a suitable solvent such as water, an organic solvent, a mixture of water with at least one organic solvent, or a mixture of at least two organic solvents, before being added to the cellulosic material.

The method according to the invention is suitable for the manufacture of paper or paperboard. Preferably, the paper or paperboard has an area weight of less than 150 g/m², of from 150 g/m² to 600 g/m² or of more than 600 g/m². In a preferred embodiment, the area weight is within the range of 70±35 g/m², more preferably 70±30 g/m², still more preferably 70±25 g/m², yet more preferably 70±20 g/m², most preferably 70±15 g/m² and in particular 70±10 g/m². In another preferred embodiment, the area weight is within the range of 150±50 g/m², more preferably 150±45 g/m², still more preferably 150±40 g/m², yet more preferably 150±35 g/m², most preferably 150±30 g/m² and in particular 150±25 g/m².

A second aspect of the invention relates to the use of the cationic polymer as defined above in the method for manufacturing paper, paperboard or cardboard as described in detail above, i.e. the use of at least a portion of the cationic polymer during pulping the cellulosic material in step (a). The thus obtained pulped cellulosic material may be subjected to further process steps, e.g. to steps (b) to (f), before being supplied to the paper machine in step (g).

### EXAMPLES

Cationic polymers P-1 to P-4 having the following properties were employed:

| | (co-)monomer composition | | state | density | active substance | salt viscosity |
|---|---|---|---|---|---|---|
| P-1 | DIMAPA-Quat., 56 wt.-% | acrylamide, 44 wt.-% | granules | 0.6 | ∼ 90 wt.-% | 350-700 |
| P-2 | DIMAPA-Quat., 80 wt.-% | acrylamide, 20 wt.-% | w/o emulsion | 1.03 | 40.5 wt.-% | 120-230 |
| P-3 | DIMAPA-Quat., 100 wt.-% | - | w/o emulsion | 1.03 | 42.1 wt.-% | 80-120 |
| P-4 | ADAME-Quat., 70 wt.-% | acrylamide, 30 wt.-% | granules | 0.6 | ∼ 90 wt.-% | 700-1,400 |

P-1 and P-4 were synthesized from an aqueous dispersion containing the monomers. P-2 and P-3 were synthesized from a water-in-oil-monomer dispersion containing water, C₁₆-C₂₀ alkane, emulsifier, and monomers. Radical polymerization was initiated by adding an initiator. P-4 was polymerized in the presence of 10 wt.-% of P-1 as cationic polymeric dispersant.

The salt viscosity of P-1 to P-4 was measured according to the following general procedure: An aqueous mixture was prepared containing 0.9 wt.-% polymer based on the active polymer content. 30 g of said aqueous mixture were diluted by adding a solution of 30 g sodium chloride in 270 ml of water. The overall mixture was stirred for 30 minutes. The temperature was adjusted to 20°C and the mixture was allowed to stand for 5 min. Subsequently, a spindle no. 1 was slowly dipped into the mixture and the viscosity was measured at 10 Upm, provided that the value was constant for 1 minute. Air bubbles at the spindle were strictly to be avoided.

### Example 1:

Recycle material consisting of 50% department store waste paper and 50% mixed waste paper was pulped in the presence of a cationic polymer. The stock consistency of the cellulosic material during pulping was 4.2%. After pulping, the pulped cellulosic material was diluted with white water to 1.0%. The diluted stock of the pulped cellulosic material was then used for the preparation of paper sheets.

The following table displays the employed cationic polymer and its concentration during the pulping step:

| Sample | Concentration [g/metric ton] | Cationic polymer | | |
|---|---|---|---|---|
| | | (cationicity) [state] | non-ionic monomer | cationic monomer |
| Comp. 1 | --- | --- | --- | --- |
| Sample 2 | 1,000 | P-1 | acrylamide | DIMAPA-Quat. |
| Sample 3 | 1,500 | | | |
| Sample 4 | 2,000 | | | |
| Sample 5 | 2,500 | P-2 | | DIMAPA-Quat. |
| Sample 6 | 3,750 | | | |
| Sample 7 | 5,000 | | | |
| Sample 8 | 2,500 | P-3 | --- | DIMAPA-Quat. |
| Sample 9 | 3,750 | | | |
| Sample 10 | 5,000 | | | |

The COD value of the drained water was determined, and the Scott Bond value, tension length, and the burst pressure of the manufactured paper sheets were measured. The results of the measurements for the comparative sample 1 and samples 2 to 10 are displayed in the following table:

| Sample | polymer | COD [mg/L] | Scott Bond [mJ] | Tension length [N] | Burst pressure [kPa] |
|---|---|---|---|---|---|
| Comp. 1 | - | 3,930 | 32.0 | 31.9 | 24.0 |
| Sample 2 | | 3,648 | 33.2 | 31.2 | 34.2 |
| Sample 3 | P-1 | 3,544 | 36.0 | 32.8 | 29.8 |
| Sample 4 | | 3,461 | 38.0 | 28.3 | 22.2 |
| Sample 5 | P-2 | 3,354 | 35.0 | 31.3 | 27.8 |
| Sample 6 | | 3,345 | 31.0 | 26.4 | 31.2 |
| Sample 7 | | 3,272 | 32.0 | 30.0 | 17.0 |
| Sample 8 | P-3 | 3,369 | 36.0 | 28.2 | 30.3 |
| Sample 9 | | 3,295 | 31.0 | 26.0 | 23.0 |
| Sample 10 | | 3,164 | 31.0 | 27.0 | 22.0 |

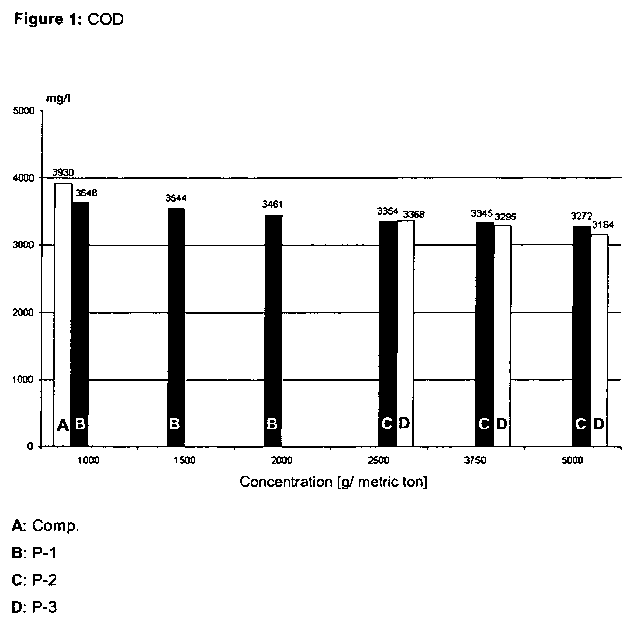

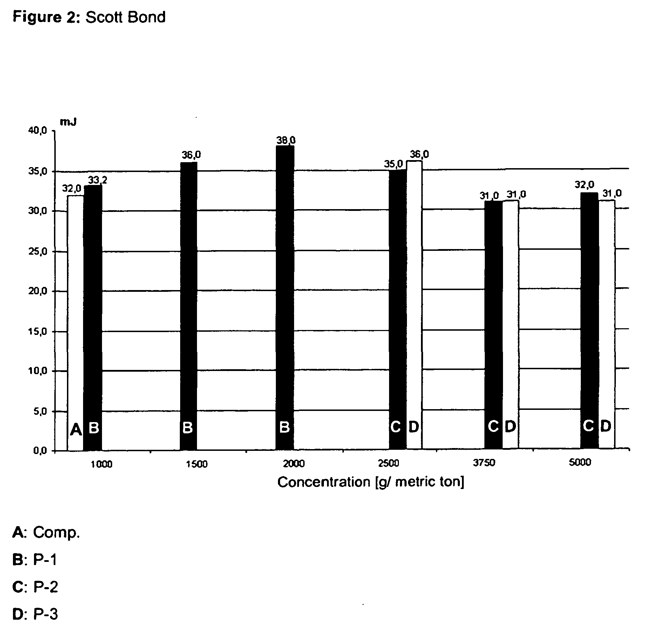

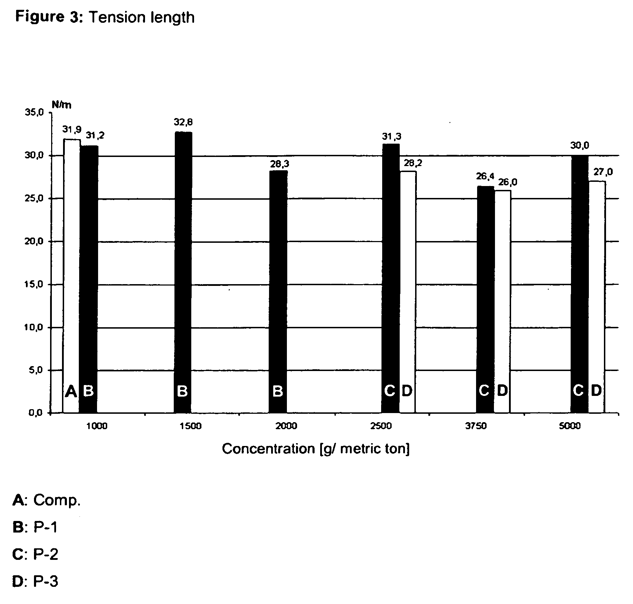

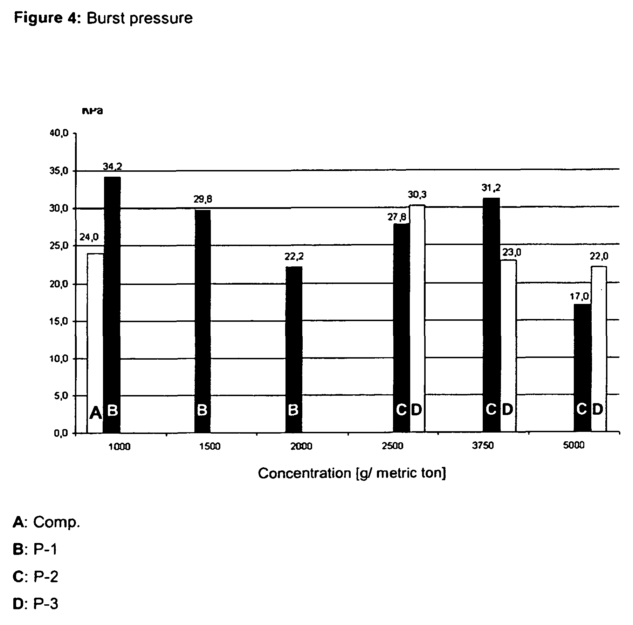

The results of Example 1 are also shown in Figures 1 to 4.

As can be seen from example 1, the best results can be achieved with cationic polymer P-1. The Scott Bond value is improved by about 12% and the burst pressure is improved by about 24% compared to the blank value of comparative sample 1. The optimal dose for P-1 is at about 1500 g/metric ton. When the dose is further increased to about 2000 g/metric ton, the paper strength substantially decreases. Improvements can also be achieved with cationic polymers P-2 and P-3, although the effect is not as drastic as with polymer P-1. Here the optimal dose is about 2500 g/ metric ton. The Chemical Oxygen Demand can be reduced with all three polymers, whereas the effect is more pronounced with the emulsified polymers (P-2 and P-3).

### Example 2:

Recycle material consisting of 100% department store waste paper was pulped in the presence of a cationic polymer. The stock consistency of the cellulosic material during pulping was 4.3%.

After pulping, the pulped cellulosic material was diluted with white water to 1.0%. The diluted stock of the pulped cellulosic material was then sheared for 15 seconds with a hand blender. The resulting cellulosic material was then used for the preparation of paper sheets.

The COD value and the turbidity of the drained water were determined immediately after the drained water was collected and after 24 hours after collection. Furthermore, the Scott Bond value (TAPPI T 833 pm-94), and the burst pressure (= Mullen burst strength; TAPPI 403os-76; ASTM D774) of the manufactured paper sheets were measured.

The following table displays the used cationic polymer and its concentration during the pulping step:

| Sample | Concentration [g/metric ton] | Cationic polymer | | |
|---|---|---|---|---|
| | | (cationicity) [state] | non-ionic monomer | cationic monomer |
| Comp. 11 | --- | --- | --- | --- |
| Sample 12 | 1,000 | P-1 | acrylamide | DIMAPA-Quat. |
| Sample 13 | 1,500 | | | |
| Sample 14 | 2,000 | | | |
| Sample 15 | 1,000 | P-4 comparative | acrylamide | ADAME-Quat. |
| Sample 16 | 1,500 | | | |
| Sample 17 | 2,000 | | | |

The results of the measurements for the comparative sample 11 and samples 12 to 17 are displayed in the following table:

| Sample | polymer | COD [mg/L] | COD after 24 hrs [mg/L] | Turbidity | Scott Bond [mJ] | Tension length [N] | Burst pressure [kPa] |
|---|---|---|---|---|---|---|---|
| Comp. 11 | --- | 6,112 | 6,025 | 911.0 | 34 | 47 | 118 |
| Sample 12 | P-1 | 5,989 | 5,792 | 154.0 | 40 | 52 | 112 |
| Sample 13 | | 5,830 | 4,683 | 88.5 | 44 | 52 | 132 |
| Sample 14 | | 5,823 | 4,666 | 58.9 | 43 | 48 | 98 |
| Sample 15 | P-4 comparative | 6,161 | 5,691 | 425.0 | 40 | 46 | 126 |
| Sample 16 | | 6,067 | 5,521 | 249.0 | 40 | 51 | 118 |
| Sample 17 | | 5,705 | 5,021 | 118.0 | 39 | 51 | 115 |

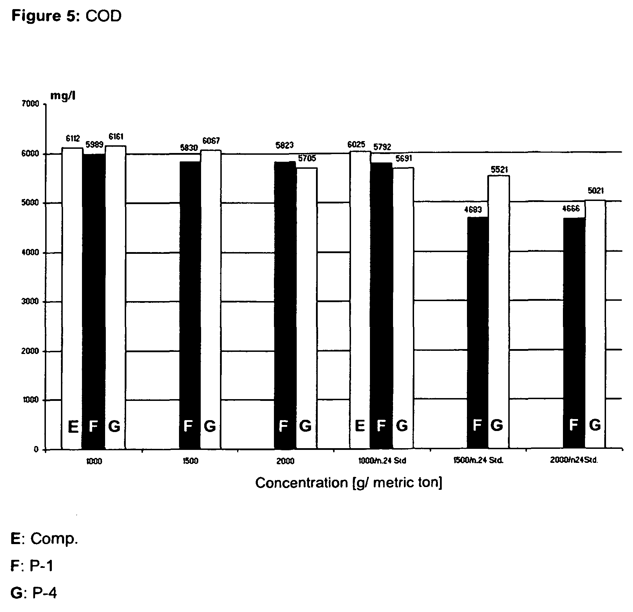

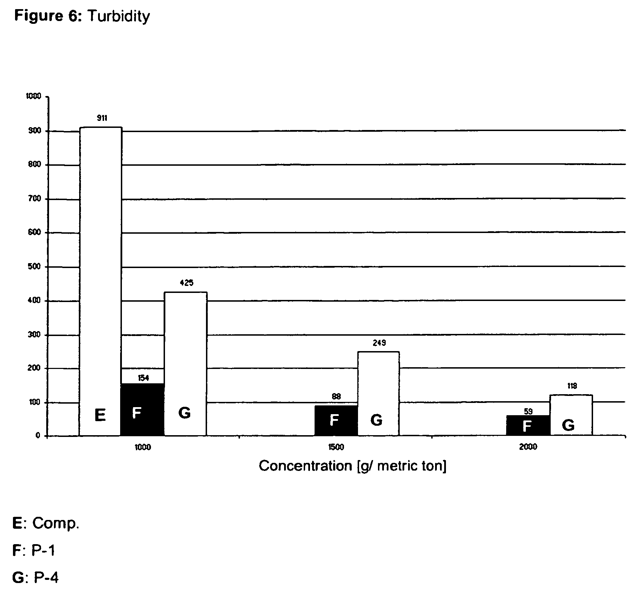

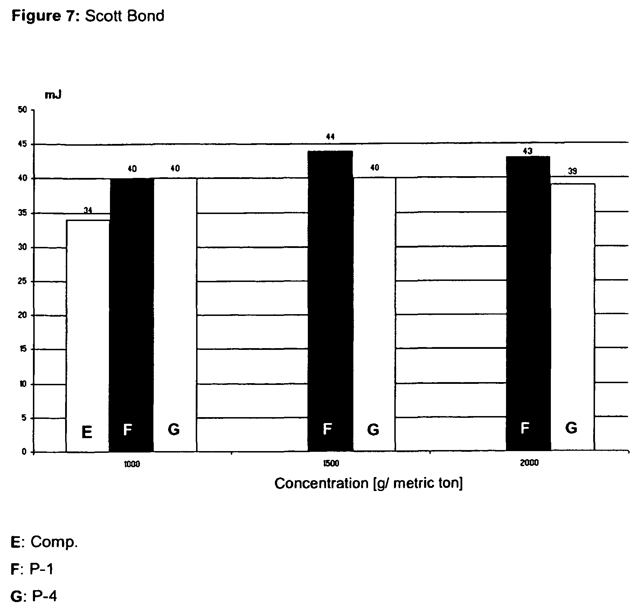

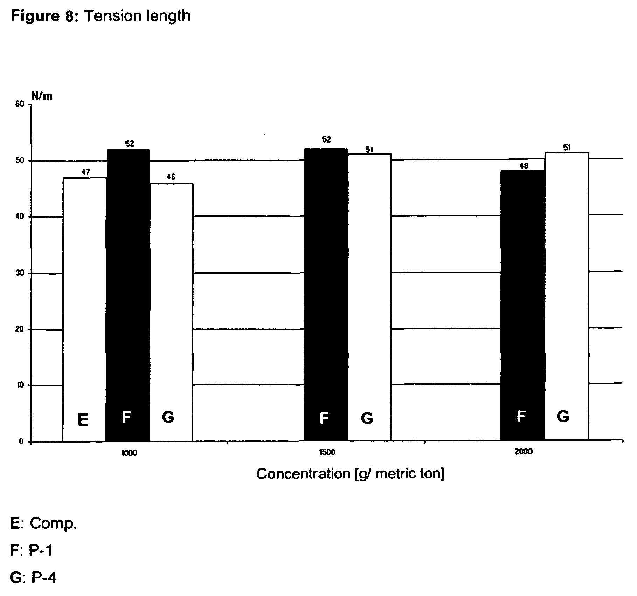

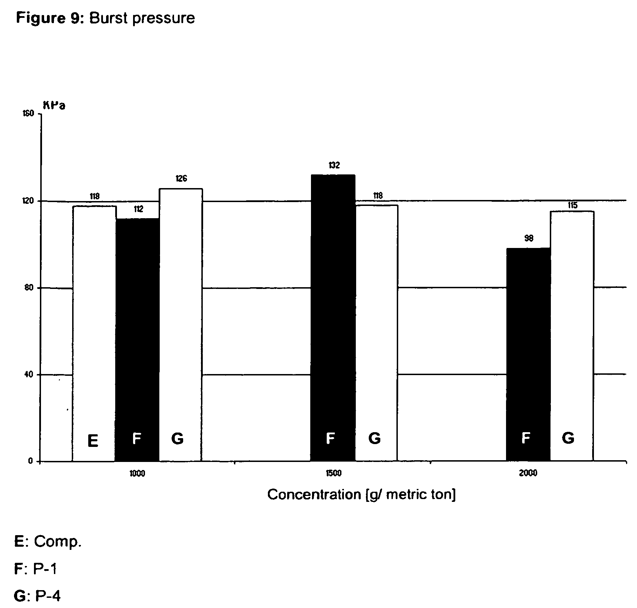

The results of Example 2 are also displayed in Figures 5 to 9.

As can be seen from example 2, the optimal dose for P-1 and P-4 is at about 1,500 g/metric ton. Both polymers improve the Scott Bond value, the tension length and the burst pressure compared to the blank value of comparative sample 11. The Chemical Oxygen Demand and turbidity can also be reduced with both polymers. When comparing P-1 with P-4, it becomes evident that P-1 (derived from DIMAPA-Quat.) is superior over P-4 (derived from ADAME-Quat.).

## Claims

1. A method for manufacturing paper or paperboard comprising the steps of
(a) pulping a cellulosic material originating from recovered waste paper in the presence of a cationic polymer which is derived from monomers according to general formula (V), 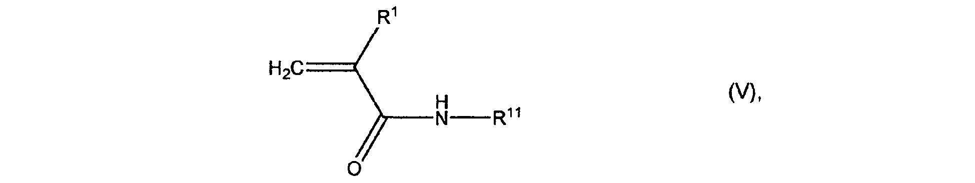 wherein
R¹ stands for -H or -CH₃, and
R¹¹ stands for -C₂-C₆-alkylene-N⁺(C₁-C₃-alkyl)₃ X⁻, where X⁻ is Cl⁻, Br⁻, or SO₄²⁻; and
(g) supplying the cellulosic material to a paper machine.

2. The method according to any of the preceding claims, wherein in step (a) the cationic polymer is present in an amount of at least 100 g/metric ton, based on the total amount of the composition containing the cellulosic material.

3. The method according to any of the preceding claims, wherein in step (a) the cellulosic material has a stock consistency within the range of from 3.0 to 6.0%.

4. The method according to any of the preceding claims, wherein
- mechanical pulping of the cellulosic material is performed by exposing the cellulosic material to shearing force; and/or
- chemical pulping of the cellulosic material is performed in the presence of water, sodium sulfide, sodium hydroxide, sulfurous acid and/or sodium bisulfite; and/or
- semi-chemical pulping of the cellulosic material is performed in the presence of sodium sulfide, sodium hydroxide, sulfurous acid and/or sodium bisulfite while the cellulosic material is exposed to shearing force.

5. The method according to any of the preceding claims, comprising the step of
(c) blending the cellulosic material in a reaction vessel wherein additives such as dyes, fillers and sizing agents are added to the pulped cellulosic material; and/or
(d) bleaching the cellulosic material; and/or
(e) refining the cellulosic material; and/or
(f) screening and/or cleaning the cellulosic material.

6. The method according to any of the preceding claims, wherein at least 50 wt.-% of the cationic polymer, which is present during step (a), is still present in step (g).

7. The method according to any of the preceding claims, wherein the cationic polymer has a weight average molecular weight M_{w} of at least 100,000 g/mol.

8. The method according to any of the preceding claims, wherein the cationic polymer comprises non-ionic monomer units derived from acrylamide or methacrylamide.

9. The method according to any of the preceding claims, wherein the cationic polymer comprises cationic monomer units derived from quaternized N,N-dimethylaminopropyl acrylamide.

10. The method according to claim 8 or 9, wherein the cationic polymer has a content of cationic monomer units within the range of 10-100 wt.-% based on the total weight of the cationic polymer.

11. The method according to any of the preceding claims, wherein a second cationic polymer is added to the cellulosic material on the paper machine.

12. Use of a cationic polymer in a method as defined in any of claims 1 to 6 or 11.

13. The use according to claim 12, wherein the cationic polymer is defined as in any of claims 7 to 10.

## Patentansprüche

1. Ein Verfahren zur Herstellung von Papier oder Karton, umfassend die Schritte
(a) Aufschließen eines cellulosehaltigen Materials, das aus wiedergewonnenem Altpapier stammt, in der Anwesenheit eines kationischen Polymers, das abgeleitet wird von Monomeren gemäß der allgemeinen Formel (V), 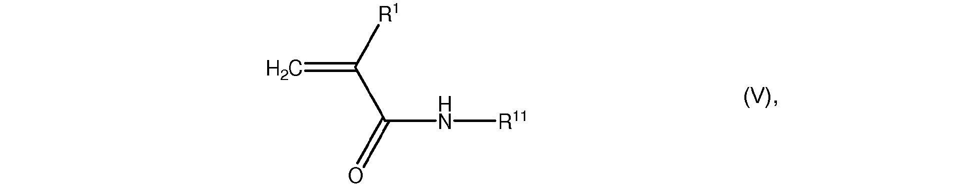 wobei
R¹ für -H oder -CH₃ steht, und
R¹¹ für -C₂-C₆-Alkylen-N⁺(C₁-C₃-Alkyl)₃ X- steht, wobei X- Cl⁻, Br⁻, oder SO₄²⁻ ist;
und
(g) Liefern des cellulosehaltigen Materials an eine Papiermaschine.

2. Das Verfahren gemäß einem der vorhergehenden Ansprüche, wobei in Schritt (a) das kationische Polymer in einer Menge von wenigstens 100 g/Tonne vorhanden ist, bezogen auf das Gesamtgewicht der Zusammensetzung, die das cellulosehaltige Material enthält.

3. Das Verfahren gemäß einem der vorhergehenden Ansprüche, wobei in Schritt (a) das cellulosehaltige Material eine Stoffdichte im Bereich von ab 3,0 bis 6,0% aufweist.

4. Das Verfahren gemäß einem der vorhergehenden Ansprüche, wobei
- der mechanische Aufschluss des cellulosehaltigen Materials ausgeführt wird, indem das cellulosehaltige Material einer Scherkraft ausgesetzt wird; und/oder
- der chemische Aufschluss des cellulosehaltigen Materials in der Anwesenheit von Wasser, Natriumsulfid, Natriumhydroxid, Schwefelsäure und/oder Natriumbisulfit durchgeführt wird; und/oder
- der halbchemische Aufschluss des cellulosehaltigen Materials in der Anwesenheit von Natriumsulfid, Natriumhydroxid, Schwefelsäure und/oder Natriumbisulfit durchgeführt wird, während das cellulosehaltige Material einer Scherkraft ausgesetzt wird.

5. Das Verfahren gemäß einem der vorhergehenden Ansprüche, umfassend die Schritte
(c) Vermengen des cellulosehaltigen Materials in einem Reaktionsbehälter, wobei Hilfsmittel, wie Farbstoffe, Füllstoffe und Leimungsmittel dem aufgeschlossenen cellulosehaltigen Material zugefügt werden; und/oder
(d) Bleichen des cellulosehaltigen Materials; und/oder
(e) Veredeln des cellulosehaltigen Materials; und/oder
(f) Sieben und/oder Reinigen des cellulosehaltigen Materials.

6. Das Verfahren gemäß einem der vorhergehenden Ansprüche, wobei wenigstens 50 Gew.-% des kationischen Polymers, das während Schritt (a) vorhanden ist, noch in Schritt (g) vorhanden sind.

7. Das Verfahren gemäß einem der vorhergehenden Ansprüche, wobei das kationische Polymer ein gewichtsmittleres Molekulargewicht M_{w} von wenigstens 100,000 g/mol aufweist.

8. Das Verfahren gemäß einem der vorhergehenden Ansprüche, wobei das kationische Polymer nicht-ionische Monomereinheiten abgeleitet von Acrylamid oder Methacrylamid umfasst.

9. Das Verfahren gemäß einem der vorhergehenden Ansprüche, wobei das kationische Polymer kationische Monomereinheiten abgeleitet von quaternisiertem N,N-Dimethylaminopropylacrylamid umfasst.

10. Das Verfahren gemäß Anspruch 8 oder 9, wobei das kationische Polymer einen Anteil von kationischen Monomereinheiten im Bereich von 10-100 Gew.-%, bezogen auf das Gesamtgewicht des kationischen Polymers, aufweist.

11. Das Verfahren gemäß einem der vorhergehenden Ansprüche, wobei ein zweites kationisches Polymer dem cellulosehaltigen Material an der Papiermaschine hinzugefügt wird.

12. Verwendung eines kationischen Polymers in einem Verfahren, wie in einem der Ansprüche 1 bis 6 oder 11 definiert.

13. Die Verwendung gemäß Anspruch 12, wobei das kationische Polymer wie in einem der Ansprüche 7 bis 10 definiert ist.

## Revendications

1. Procédé de fabrication de papier ou de carton, comprenant les étapes qui consistent à :
(a) réduire en pâte un matériau cellulosique provenant de vieux papiers de récupération en présence d'un polymère cationique qui est dérivé de monomères selon la formule générale (V), 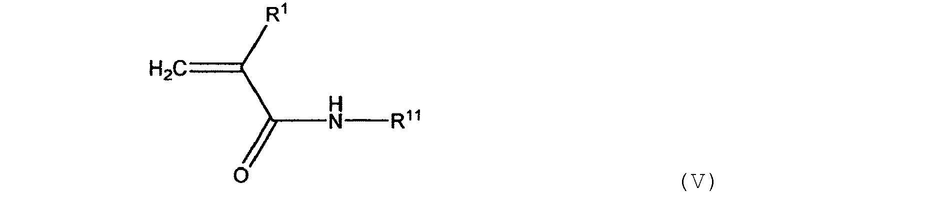 dans laquelle
R¹ représente un groupe -H ou -CH₃, et
R¹¹ représente un groupe -C₂-C₆-alkylène-N⁺ (C₁-C₃-alkyl)₃X⁻, dans lequel X⁻ est Cl⁻, Br⁻, ou SO₄²⁻ ; et
(g) introduire le matériau cellulosique dans une machine à papier.

2. Procédé selon l'une quelconque des revendications précédentes, dans lequel dans l'étape (a) le polymère cationique est présent dans une quantité d'au moins 100 g/tonne métrique, relativement à la quantité totale de la composition contenant le matériau cellulosique.

3. Procédé selon l'une quelconque des revendications précédentes, dans lequel dans l'étape (a) le matériau cellulosique a une concentration sous forme de pâte de 3,0 % à 6,0 %.

4. Procédé selon l'une quelconque des revendications précédentes, dans lequel
- la réduction en pâte mécanique du matériau cellulosique est réalisée par exposition du matériau cellulosique à une force de cisaillement ; et/ou
- la réduction en pâte chimique du matériau cellulosique est réalisée en présence d'eau, de sulfure de sodium, d'hydroxyde de sodium, d'acide sulfureux et/ou de bisulfite de sodium ; et/ou
- la réduction en pâte semi-chimique du matériau cellulosique est réalisée en présence de sulfure de sodium, d'hydroxyde de sodium, d'acide sulfureux et/ou de bisulfite de sodium tandis que le matériau cellulosique est exposé à une force de cisaillement.

5. Procédé selon l'une quelconque des revendications précédentes, comprenant l'étape qui consiste à :
(c) mélanger le matériau cellulosique dans une cuve de réaction, des additifs tels que des colorants, des charges et des agents d'encollage étant ajoutés au matériau cellulosique réduit en pulpe ; et/ou
(d) blanchir le matériau cellulosique ; et/ou
(e) raffiner le matériau cellulosique ; et/ou
(f) tamiser et/ou nettoyer le matériau cellulosique.

6. Procédé selon l'une quelconque des revendications précédentes, dans lequel au moins 50 % en poids du polymère cationique, qui est présent durant l'étape (a), est encore présent dans l'étape (g).

7. Procédé selon l'une quelconque des revendications précédentes, dans lequel le polymère cationique a une masse moléculaire moyenne en poids M_{w} d'au moins 100 000 g/mol.

8. Procédé selon l'une quelconque des revendications précédentes, dans lequel le polymère cationique comprend des unités monomères non ioniques dérivées d'acrylamide ou de méthacrylamide.

9. Procédé selon l'une quelconque des revendications précédentes, dans lequel le polymère cationique comprend des unités monomères cationiques dérivées de N,N-diméthylaminopropylacrylamide quaternisé.

10. Procédé selon la revendication 8 ou 9, dans lequel le polymère cationique a une teneur en unités monomères cationiques de 10 % à 100 % en poids relativement au poids total du polymère cationique.

11. Procédé selon l'une quelconque des revendications précédentes, dans lequel un deuxième polymère cationique est ajouté au matériau cellulosique sur la machine à papier.

12. Utilisation d'un polymère cationique dans un procédé tel que défini dans l'une quelconque des revendications 1 à 6 ou 11.

13. Utilisation selon la revendication 12, dans laquelle le polymère cationique est tel que défini dans l'une quelconque des revendications 7 à 10.
